# FASCICULE DE BREVET EUROPEEN

(11) **EP 2 266 826 B1**
(45) Date de publication et mention de la délivrance du brevet: **18.01.2012**
(21) Numéro de dépôt: 10166678.2
(22) Date de dépôt: 21.06.2010
(51) Int. Cl.: B60J 7/08

(54) **Dispositif de couverture automatisé**
Automatische Abdeckungsvorrichtung
Automated covering device

(30) Priorité: 22.06.2009 BE 200900373
(43) Date de publication de la demande: 29.12.2010
(73) Titulaire: Ets JOSKIN S.A., B-4630 Soumagne (BE)
(72) Inventeur: Joskin, Victor, B-4633, Soumagne (BE)
(74) Mandataire: pronovem

(56) Documents cités:
- US-A- 5 924 758
- US-A1- 2003 151 271
- US-B1- 6 513 856

## Description

### Objet de l'invention

La présente invention se rapporte à un dispositif de couverture, par exemple de bâchage, pour tout véhicule ou moyen de transport, sur route, rail ou terrain naturel, notamment agricole, minier, etc., constitué d'une caisse de transport, basculante ou non, ouverte dans sa partie supérieure, et dotée d'une paroi arrière ouvrante, pour libérer le passage de la charge au déchargement. La paroi arrière peut s'ouvrir par exemple par battement latéral simple ou multiple, par oscillation verticale vers le haut et vers le bas, par soulèvement vertical ou quasi-vertical ou par pivotement vers le haut autour d'articulations supérieures déportées vers l'avant du véhicule, ce qui permet de déporter la paroi vers le haut à l'ouverture. Ce déport vers le haut est utile lorsque l'on souhaite que la charge puisse excéder la hauteur de caisse. Dans le cas d'un axe fixe de pivotement horizontal (sans déportement), le déchargement de la matière transportée par l'arrière de la caisse par exemple pourrait en effet être entravé par la présence de cet axe fixe. Un tel dispositif de couverture peut être commandé par toute voie, mécanique, hydraulique, électrique, ou autre.

L'invention concerne également tout véhicule ou moyen de transport équipé du dispositif de couverture précité.

### Etat de la technique

On connaît déjà différents modèles de dispositifs de couverture, certains manuels, d'autres automatisés.

Les documents GB-A-2 423 067 et CA-A-2 582 619 proposent un système de bâche unique ou double à enroulement latéral, déroulée à l'aide de deux bras pivotants fixés sur la cloison avant et arrière. Cependant ce dispositif vise des remorques-plateaux sans parois latérales et nécessite un berceau support de bâche central ainsi que des arceaux-supports transversaux disposés à intervalles réguliers sur la longueur de l'espace de chargement; en outre, dans ce dispositif, chaque bâche ne pouvant couvrir qu'une moitié de l'espace de chargement, la longueur des bras pivotants ne pourra pas s'accommoder d'une hauteur de charge dépassant les limites des parois avant et arrière et en position enroulée, la double bâche est positionnée à la grande médiane de l'espace de chargement, gênant immanquablement le chargement par le haut. Enfin, ce dispositif est incapable de s'accommoder de l'ouverture de la paroi arrière.

Le document EP-A-1950068 propose une remorque porte-conteneur avec dispositif de bâchage pour conteneurs à face supérieure ouverte et paroi arrière ouvrante, utilisant deux bras extensibles pivotant autour de points fixes situés au centre de la longueur du container, sur les côtés latéraux. Ce dispositif déploie la bâche dans le sens de la longueur de la caisse, d'où une difficulté de tendre la bâche pour empêcher l'échappée de matières volantes, ce qui est l'un des buts premiers du bâchage. En outre, ce dispositif ne peut pas s'accommoder d'un conteneur fixe à déchargement par l'arrière car le déchargement s'effectuera sur la bâche enroulée et endommagera immanquablement celle-ci. Enfin, ce dispositif élargit le véhicule et peut rendre celui-ci impropre à la circulation sur voie publique au vu des restrictions légales en matière de largeur des véhicules.

Le document US-A-2008/0042466 propose un dispositif de retournement de la bâche supérieure d'une remorque conteneur. Un tel dispositif ne libère pas complètement la baie de chargement une fois ouvert, la bâche risquant alors de flotter dans l'espace de chargement, de rester prise dans la matière chargée et partant de s'endommager, par exemple par déformation. En outre, ce dispositif est incompatible avec l'ouverture de la paroi arrière

Le document NZ-A-517380 présente un dispositif à guidage de bâche par éléments flexibles, par exemple des cordes, éventuellement amélioré par deux bras basculants pour passer par dessus la charge. Ce dispositif présente l'inconvénient d'utiliser des éléments flexibles (cordes) susceptibles d'être endommagés dans un environnement rude comme le transport et l'agriculture, de ne pas tendre la bâche sur toute sa longueur et surtout, à nouveau, de ne pas être compatible avec l'ouverture de la paroi arrière de la structure à couvrir.

Tous les modèles connus dans l'état de la technique présentent donc des défauts fonctionnels et/ou sont incompatibles avec l'ouverture de la paroi arrière. Les modèles manuels connus sont lourds et parfois dangereux à manipuler et/ou difficiles à mettre en place ou en oeuvre. Les modèles automatisés ne peuvent pas être montés sur des caisses dont la paroi arrière s'ouvre. Ils seront en outre gênés, voire bloqués si la charge réelle excède la hauteur de caisse, ce qui est fréquemment le cas en matière de transport en vrac, notamment agricole. Par ailleurs, tous les modèles connus nécessitent une intervention manuelle pour ouvrir, attacher et/ou sécuriser la bâche après avoir recouvert la charge.

### Buts de l'invention

La présente invention vise à pallier les inconvénients précités et à proposer un dispositif de couverture nouveau de conception simple et efficace, dont le fonctionnement soit entièrement automatisé, ou non, respectivement, ou puisse être commandé à distance sans, ou en partie avec, respectivement, intervention humaine sur le véhicule lui-même, en ce compris le maintien de la couverture après sa mise en place.

L'invention a également pour but de permettre la couverture d'une charge excédant ou non la hauteur de caisse, au moyen d'un dispositif qui puisse être monté sur une caisse de transport avec paroi arrière ouvrante dont l'ouverture s'effectue soit par battement latéral simple ou multiple, soit par oscillation verticale vers le haut et vers le bas, soit par pivotement autour d'axes déportés ou non vers l'avant de la caisse, soit par soulèvement vertical ou quasi-vertical.

L'invention a encore pour but de fournir un système de couverture présentant en outre la caractéristique avantageuse complémentaire de pouvoir servir de déflecteur de réception en cas de chargement latéral de la remorque par soufflage ou déversement dans la caisse, par exemple au moyen d'une ensileuse, d'une turbine hacheuse, d'un tapis transbordeur ou de tout autre dispositif.

### Principaux éléments caractéristiques de l'invention

La présente invention a pour objet, selon les termes de la revendication 1, un moyen de transport comprenant une caisse de chargement ouverte dans sa partie supérieure et munie d'une paroi avant, d'une paroi arrière ouvrante, de deux parois latérales, ainsi que d'un dispositif de couverture comportant :
- une couverture enroulante sur un dispositif d'enroulement longitudinal à tambour, lui-même fixé sur deux bras montés pivotants autour d'axes attachés respectivement à ou à hauteur de la paroi avant et à ou à hauteur de la paroi arrière de ladite caisse,
- un dispositif de rappel tirant chaque bras pivotant, soit dans le sens de la fermeture, soit dans le sens de l'ouverture de l'espace de chargement de la caisse,
- un dispositif de puissance actionnant ledit dispositif d'enroulement pour recouvrir ou découvrir l'espace de chargement de la caisse,
caractérisé en ce que le dispositif de couverture comprend un dispositif de jonction, intermittent ou permanent, à angle variable, entre le bras pivotant monté sur ou à hauteur de la paroi arrière ouvrante et l'axe du dispositif d'enroulement longitudinal à tambour, ledit dispositif de jonction à angle variable assurant un débattement angulaire dudit bras pivotant par rapport audit axe du dispositif d'enroulement longitudinal à tambour, lors de l'ouverture de la paroi arrière ouvrante.

Des modes d'exécution particuliers de l'invention reprennent les caractéristiques de la revendication 1 prises en combinaison avec une ou plusieurs des caractéristiques additionnelles, selon les termes des revendications dépendantes.

Avantageusement, le moyen de transport selon l'invention est une remorque de chargement par soufflage ou déversement dans la caisse, telle qu'une remorque d'ensilage, une benne basculante, une remorque à paroi pousseuse ou un épandeur de matières, organiques ou non.

### Brève description des figures

Des exemples de réalisation suivant l'invention sont décrits par la suite avec plus de détails à l'aide des figures annexées.

La Figure 1 montre une vue partielle avant d'un dispositif de couverture selon l'invention monté sur la caisse de chargement d'une remorque agricole d'ensilage, la couverture étant en position ouverte.

La Figure 2 montre la même vue partielle avant d'un dispositif de couverture selon l'invention monté sur la caisse de chargement d'une remorque agricole d'ensilage, la couverture étant en position fermée par dessus une charge (non représentée) excédant la hauteur de la caisse.

La Figure 3 montre la même vue partielle avant d'un dispositif de couverture selon l'invention monté sur la caisse de chargement d'une remorque agricole d'ensilage, la bâche étant en position fermée à ras de la hauteur de la caisse.

La Figure 4 montre une vue partielle arrière d'un dispositif de couverture selon l'invention monté sur la caisse de chargement d'une remorque agricole d'ensilage, la couverture étant en position ouverte.

La Figure 5 montre une vue de détail d'un dispositif de connexion arrière du tambour enrouleur au bras oscillant arrière d'un dispositif de couverture selon l'invention monté sur la caisse de chargement d'une remorque agricole d'ensilage, la connexion arrière étant en position fermée.

La Figure 6 montre la même vue de détail que sur la Figure 5, la connexion arrière étant en position ouverte.

La Figure 7 montre une vue rapprochée du verrou d'un dispositif de connexion arrière du tambour enrouleur au bras oscillant arrière d'un dispositif de couverture selon l'invention monté sur la caisse de chargement d'une remorque agricole d'ensilage, le verrou étant en position fermée.

La Figure 8 montre la même vue rapprochée que sur la Figure 7, le verrou étant en position ouverte.

Les Figures 9A, 9B et 9C montrent une vue schématisée des étapes respectives du processus d'ouverture d'une connexion arrière du tambour enrouleur au bras oscillant arrière d'un dispositif de couverture selon l'invention monté sur la caisse de chargement d'une remorque agricole d'ensilage, lors de l'ouverture de la paroi arrière de caisse de ladite remorque.

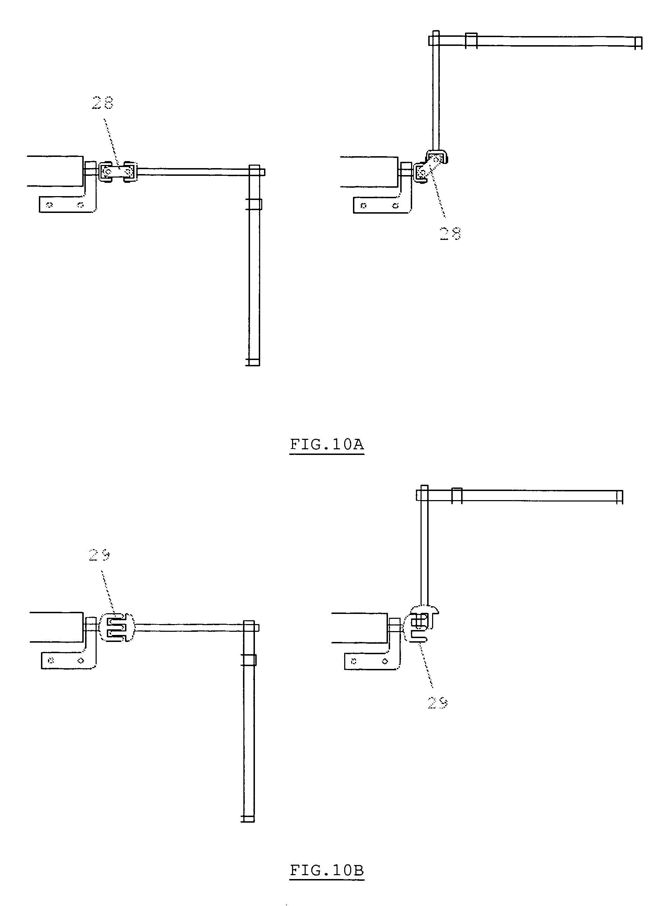

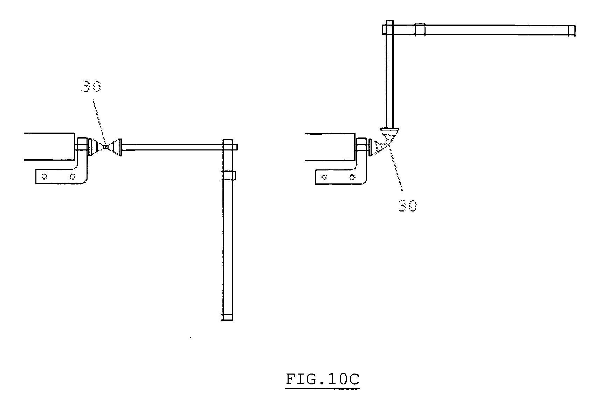

Les Figures 10A, 10B et 10C montrent des exemples non exhaustifs d'autres formes de réalisation de la connexion arrière du tambour enrouleur au bras oscillant arrière d'un dispositif de couverture selon l'invention monté sur la caisse de chargement d'une remorque agricole d'ensilage, où la connexion est réalisée de manière permanente au moyen d'une articulation positionnée dans l'axe des charnières de la paroi arrière ouvrante de ladite remorque. La Figure 10A illustre un dispositif d'articulation à cardan. La Figure 10B illustre un dispositif d'articulation à doigts rigides. La Figure 10c illustre un dispositif d'articulation en caoutchouc semi-rigide.

La Figure 11 montre un exemple, non limitatif dans le contexte de l'invention, de schéma électrique de commande du dispositif de couverture équipant une remorque d'ensilage selon l'invention.

L'invention est décrite par la suite au moyen d'une description non limitative de certaines exécutions de détail.

### Description détaillée de l'invention

Les buts visés par l'invention sont atteints, grâce à une couverture enrouleuse oscillant de gauche à droite ou de droite à gauche par rapport à la caisse de transport. Cette dernière est une caisse de chargement quelconque, basculante ou non, comportant une couverture constituée d'une bâche, d'un filet, d'un volet enrouleur ou de tout autre moyen de couverture, continu ou sectionnel, imperméable ou non, fixée sur un dispositif d'enroulement longitudinal continu ou sectionnel quelconque, lui-même fixé sur deux bras oscillants attachés l'un soit à la paroi avant si elle est fixe, soit à hauteur de celle-ci si elle n'est pas fixe, l'autre à ou à hauteur de la paroi arrière ouvrante de la caisse de chargement. La paroi avant peut ne pas être fixe, comme par exemple dans le cas d'une caisse possédant une paroi frontale pousseuse. En outre, un dispositif de puissance quelconque actionne ledit dispositif d'enroulement continu ou sectionnel pour recouvrir une partie ou l'intégralité de l'espace de chargement de la caisse ou découvrir celui-ci. Enfin, un dispositif de rappel piloté, semi-automatique ou automatique quelconque tire les bras oscillants précités par exemple dans le sens de la fermeture de l'espace de chargement de la caisse. On remarquera que, si l'espace de chargement n'est pas entièrement couvert par la partie automatique du dispositif d'enroulement, par exemple à cause de la présence du dispositif de jonction à angle variable à l'arrière (voir ci-après), un dispositif d'enroulement ou de couverture additionnel, éventuellement manuel, peut être prévu à cet endroit afin d'assurer la couverture complète de l'espace de chargement. Le dispositif de couverture pourrait toutefois aussi bien être réalisé avec un dispositif de rappel tirant dans le sens de l'ouverture de l'espace de chargement.

Dans un mode d'exécution possible de l'invention, le dispositif de puissance est muni d'un frein quelconque maintenant l'espace de chargement ouvert contre la tension du dispositif de rappel, le dispositif d'enroulement continu ou sectionnel étant alors positionné avec la couverture enroulée au sommet d'une des parois latérales de la caisse de chargement. Pour couvrir l'espace de chargement, le dispositif de puissance est commuté pour relâcher le frein et actionner le dispositif d'enroulement dans le sens du déroulement en sorte que le dispositif de rappel attire les bras oscillants vers l'autre côté latéral de la caisse, déroulant simultanément la couverture de manière contrôlée, c'est-à-dire en freinant la tension du dispositif de rappel afin d'éviter une fermeture brutale de l'espace de chargement qui risquerait d'endommager l'assemblage mécanique, la couverture et la caisse. On notera que si le dispositif de rappel est constitué non par des ressorts, mais par des vérins permettant de manoeuvrer les bras oscillants dans les deux sens de manière contrôlée, le frein précité peut ne pas être nécessaire.

Selon un mode d'exécution particulier de l'invention, ce processus peut n'être effectué que partiellement, par exemple pour utiliser le dispositif de couverture comme déflecteur latéral de réception pour le remplissage de l'espace de chargement par soufflage ou déversement depuis le côté du véhicule, par exemple à l'aide d'une ensileuse, d'une turbine hacheuse ou d'un tapis transbordeur.

Lorsque l'espace de chargement est partiellement ou intégralement couvert, le dispositif de puissance peut être commuté en sens contraire pendant un court laps de temps de manière à s'assurer de la tension complète de la couverture par dessus la matière transportée ou l'espace de chargement, évitant/réduisant ainsi la prise au vent et/ou l'échappement de matière volante ou pulvérulente.

Le dispositif selon l'invention comprend un dispositif de jonction ou liaison ou connexion mécanique entre deux axes ou arbres à angle variable entre ces axes ou arbres, situé dans l'axe du dispositif d'enroulement, en sorte que la paroi arrière de l'espace de chargement puisse être ouverte sans endommager le dispositif d'enroulement, y compris en tenant compte du déport éventuel des charnières de paroi arrière ouvrante vers l'avant du véhicule.

Dans un exemple de réalisation du dispositif selon l'invention, ce dispositif de jonction à angle variable est réalisé de manière à ce que la jonction soit intermittente en désolidarisant le dispositif d'enroulement du bras pivotant fixé sur la paroi arrière ouvrante: dans la partie arrière du dispositif d'enroulement, un dispositif permet donc de désolidariser le bras oscillant arrière pour ouvrir la paroi arrière basculante. Ce dispositif comprend un berceau support de tambour et un axe de connexion coulissant entre l'embout du dispositif d'enroulement (faisant office de premier axe de la jonction) et le bras oscillant (faisant office de second axe de la jonction présentant un débattement angulaire par rapport au premier axe précité). Cette liaison est réalisée à l'aide d'un moyen de puissance quelconque. En position par défaut, l'embout et l'extrémité du bras sont connectés en sorte que, notamment pour actionner la couverture, le bras oscillant puisse guider la couverture vers l'autre paroi latérale de caisse. Pour actionner l'ouverture de la paroi arrière, l'embout et l'extrémité du bras sont déconnectés en sorte que le tambour ne soit pas plié par le soulèvement de la paroi arrière ou sa rotation autour de ses charnières éventuellement déportées vers l'avant du véhicule.

Dans un autre exemple de réalisation selon l'invention, le dispositif de jonction à angle variable est réalisé de manière à ce que la jonction soit permanente par un dispositif de jonction articulée rendant solidaires le dispositif d'enroulement et le bras pivotant fixé sur la paroi arrière ouvrante: un tel dispositif peut par exemple être un arbre muni d'une articulation à cardan, à doigts, à jonction en caoutchouc, ou tout autre dispositif d'articulation d'arbre. La position du dispositif de jonction à angle variable n'est pas déterminante pour l'invention. Dans un mode de réalisation préféré de l'invention, le point d'inflexion du dispositif de jonction à angle variable se situera dans l'axe des points de pivot de la paroi arrière ouvrante. Toutefois d'autres positions peuvent également permettre d'ouvrir la paroi arrière sans endommager le dispositif d'enroulement. En outre, l'invention peut également être réalisée en plaçant le dispositif de jonction à angle variable dans la longueur de la couverture, pourvu que la matière de celle-ci autorise le pliage. En pareille configuration, la couverture enroulée enserrerait le dispositif de jonction à angle variable, ce qui permettrait à la couverture de courir jusqu'à l'extrémité de caisse.

Bien que l'invention sera décrite ci-après en conjonction avec des formes d'exécution illustrées, il est entendu que cette description ne vise nullement à limiter l'invention à de telles exécutions particulières. Au contraire, la présente description vise à couvrir toutes alternatives, modifications et équivalents pouvant être inclus dans l'esprit et les domaines d'application de l'invention tels que définis par les caractéristiques des revendications.

### Description de formes d'exécution préférées de l'invention

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions.

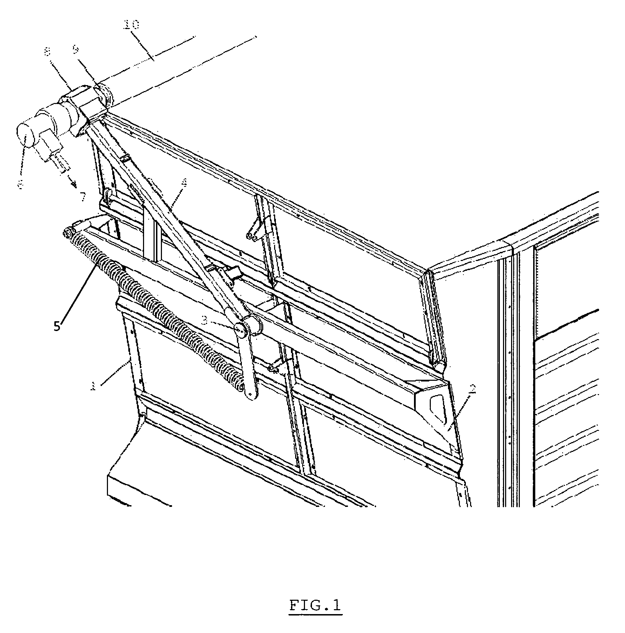

La Figure **1** représente la partie avant d'une caisse de chargement **1** d'une remorque ou d'un véhicule ou plus généralement moyen de transport, dans ce cas-ci une remorque d'ensilage, sur laquelle est monté un dispositif de couverture selon l'invention. Sur la paroi frontale est fixé un support avant **2** comportant un axe de rotation avant **3** auquel est fixé un bras pivotant **4.** Entre une extrémité latérale du support avant **2** et l'extrémité inférieure du bras pivotant **4** est monté un ressort de rappel **5.** L'extrémité supérieure du bras pivotant **4** supporte au niveau du côté avant de la caisse le dispositif enrouleur de bâche proprement dit. Ce dispositif comporte par exemple un moteur hydraulique **6** alimenté par un système de puissance quelconque indiqué par la flèche **7,** un dispositif de frein asservi **8,** un tambour enrouleur **9** et la couverture elle-même constituée ici d'une bâche **10** (filet à mailles fines). La bâche **10** a une extrémité longitudinale fixée par des moyens quelconques (non représentés) sur la paroi latérale de caisse de chargement **1,** le reste de la bâche étant enroulée autour du tambour enrouleur **9.** Sur la Figure **1****,** le dispositif de couverture est représenté en position ouverte, le côté supérieur de la caisse de chargement **1** étant ouvert en vue du chargement par le haut.

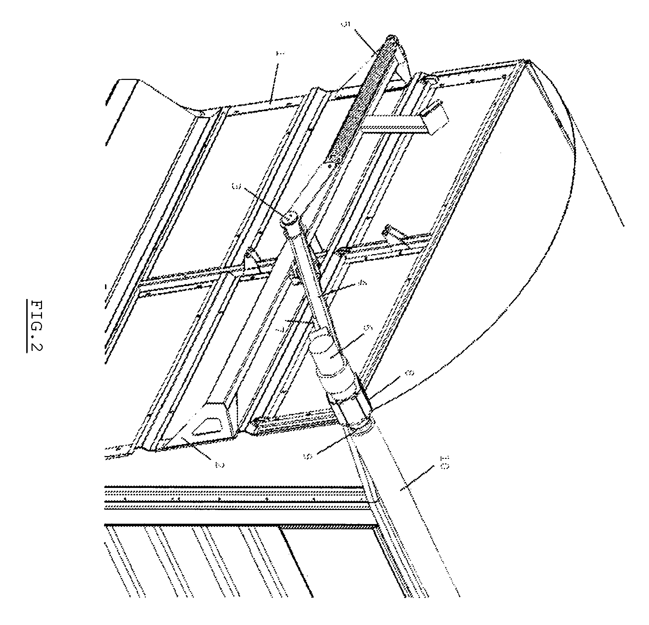

Dans la Figure **2****,** le même dispositif est représenté avec la bâche **10** fermée, c'est-à-dire obturant le côté supérieur de la caisse de chargement **1,** dans ce cas-ci par-dessus une charge (non représentée) qui formerait un dôme excédant la hauteur de caisse **1.** Pour procéder à la fermeture de la bâche et parvenir à ce résultat, le dispositif de puissance **7** commande le frein asservi **8** afin que celui-ci desserre son étreinte sur le tambour enrouleur **9.** Le dispositif de puissance **7** commande ensuite la rotation du moteur hydraulique 6 dans le sens du déroulement de la bâche. A travers le frein **8,** le moteur hydraulique **6** entraîne alors la rotation du tambour enrouleur **9,** lequel entraîne à son tour le déroulement de la bâche **10.** A mesure que le tambour enrouleur **9** déroule la bâche **10,** le ressort de rappel **5** force le bras pivotant **4** à pivoter autour de l'axe de rotation **3,** ce qui a pour effet de déployer la bâche **10** par dessus la caisse de chargement **1,** y compris par-dessus la matière chargée qui excéderait éventuellement la hauteur de la dite caisse de chargement **1.** Une fois le tambour enrouleur **9** parvenu au sommet de la paroi latérale opposée de la caisse de chargement **1,** le processus est stoppé en arrêtant le dispositif de puissance **7,** ce qui a pour effet d'arrêter la rotation du moteur hydraulique **6** puis de resserrer le frein **8.**

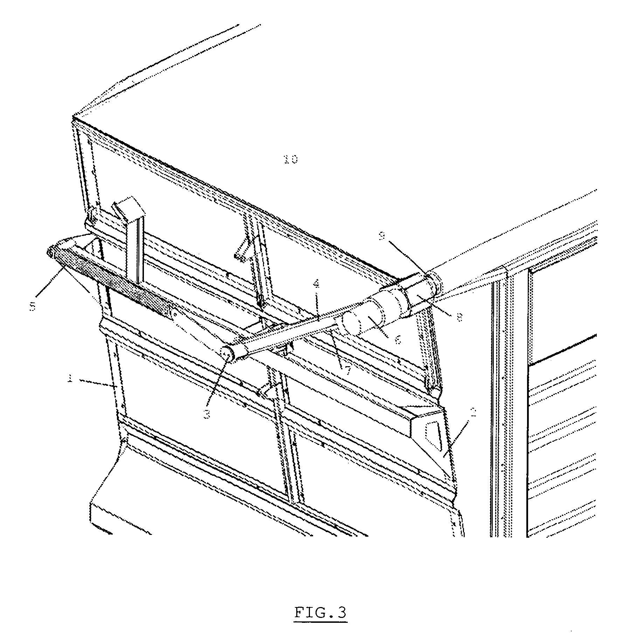

Le dispositif permet de tendre la bâche comme illustré sur la Figure **3****.** Lorsque la bâche parvient au sommet de la paroi latérale opposée de la caisse, on peut inverser le dispositif de puissance **7** pour commander à nouveau le desserrage du frein **8** puis la rotation du moteur hydraulique **6** dans le sens inverse, ce qui a pour effet d'entraîner l'enroulement autour du tambour enrouleur **9** d'une éventuelle portion flottante de la bâche **10** qui aurait par exemple été provoquée par la présence de matière en volume débordant la hauteur des parois de la caisse de chargement **1.** Dès que la bâche **10** est bien tendue, le dispositif de puissance **7** est stoppé, entraînant à nouveau l'arrêt du moteur hydraulique **6** et autorisant le frein **8** à se resserrer.

Si à ce stade, le dispositif de puissance **7** n'est pas stoppé, le processus d'enroulement de la bâche **10** continuera, entraînant le pivotement du bras oscillant **6** dans le sens inverse jusqu'à ce que la caisse de chargement **1** soit débâchée.

Avantageusement selon l'invention, la libération du frein asservi **8** avant la mise en rotation du moteur hydraulique **6** ne se fait que de manière partielle afin de maîtriser la vitesse du processus de couverture; dans le cas contraire, la tension du ressort de rappel **5** entraînerait la rotation brutale du bras pivotant **4,** avec les risques de dégâts mécaniques à la structure et de dégâts hydrauliques, tels qu'une brusque aspiration d'huile, que cela entraînerait. La rotation simultanée du moteur hydraulique **6** participe à cette maîtrise du déroulement pour offrir un processus de couverture soigné et précis, protégeant aussi la structure de la bâche et sécurisant son déroulement et son enroulement ultérieur.

Bien qu'il soit fait appel ici à un dispositif de puissance **7** et un moteur hydraulique **6,** il est évident pour l'homme de l'art que tous autres éléments mécaniques, électriques, électroniques, pneumatiques ou systèmes équivalents permettront de réaliser une exécution similaire du dispositif de couverture selon l'invention.

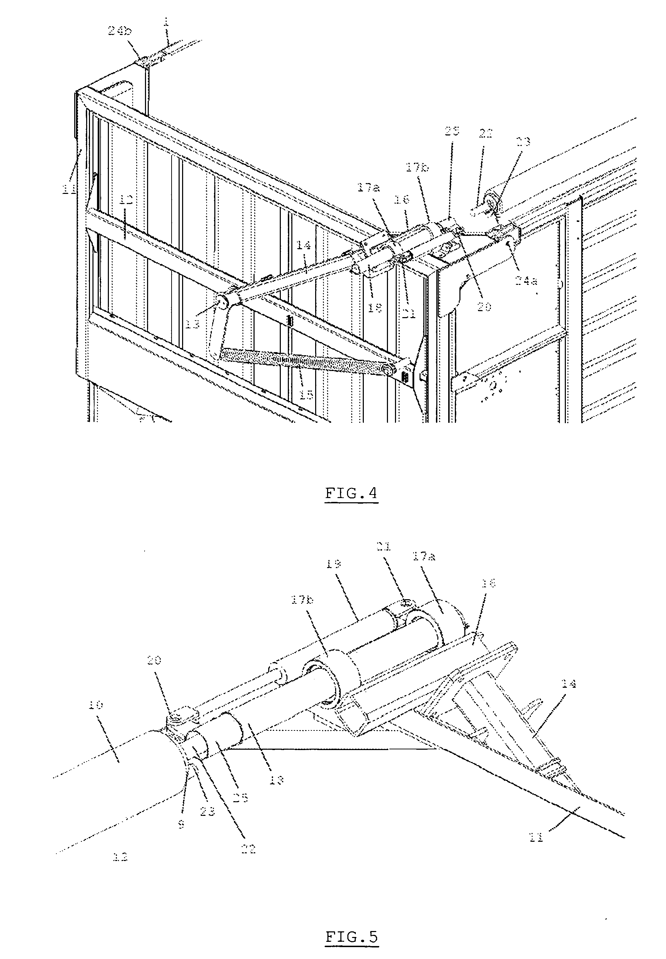

La Figure **4** représente la partie arrière d'une caisse de chargement **1** d'une remorque ou d'un véhicule ou plus généralement moyen de transport, dans ce cas-ci une remorque d'ensilage, sur laquelle est monté un dispositif de couverture selon l'invention. Sur la paroi arrière ouvrante **11** est fixé un support arrière **12** comportant un axe de rotation arrière **13** auquel est fixé un bras pivotant arrière **14.** Entre l'extrémité latérale du support arrière **12** - correspondant à la même extrémité du support avant **2** à laquelle est attaché le ressort de rappel avant **5** - et l'extrémité inférieure du bras pivotant **14** est monté un ressort de rappel arrière **15.** L'extrémité supérieure du bras pivotant **14** supporte le dispositif de connexion du dispositif enrouleur au bras pivotant arrière **14** au moyen d'un support de connexion arrière **16.** Ce dispositif de connexion supporte un ou plusieurs guides de connexion arrière **17a** et **17b** enserrant un axe de connexion arrière **18** terminé, à son extrémité pointant vers l'avant de la caisse de chargement **1,** par un embout d'axe de connexion **25.** Un vérin de pilotage de la connexion arrière **19** relie le guide de connexion **17a** et l'axe **18** par l'intermédiaire des fixations de vérin **20** et **21.**

La Figure 4 illustre une configuration du dispositif de connexion arrière du dispositif de couverture selon l'invention dans laquelle l'axe de connexion **18** n'est pas engagé dans l'embout arrière **22** du tambour enrouleur **9.** Le tambour enrouleur **9** repose alors dans un support **23** dessiné de telle manière qu'il maintienne le tambour enrouleur **9** ainsi libéré mais ne l'empêche pas de s'extraire du support pour la phase de déroulement de la bâche **10.** Cette configuration correspond à la position de la connexion arrière dans laquelle la paroi arrière **11** de la caisse de chargement **1** peut pivoter vers le haut autour de ses charnières **24a** et **24b** au moyen d'un système de commande quelconque non inclus au présent dispositif.

La Figure **5** procure une vue inversée du dispositif de connexion arrière du tambour enrouleur **9** au bras oscillant arrière **14.** Par rapport à la figure précédente, l'axe **18** a ici été déplacé dans le sens du tambour enrouleur **9** en sorte que l'embout arrière de tambour **22** pénètre dans l'embout de l'axe de connexion **25.** Pour sécuriser ce mouvement, l'embout de tambour **22** a une forme mâle conique et arrondie à son extrémité et l'embout d'axe de connexion **25** a une forme femelle conique et arrondie inverse, faisant office d'entonnoir d'alignement lorsque l'embout de tambour **22** pénètre dans l'embout de coulisseau **25.**

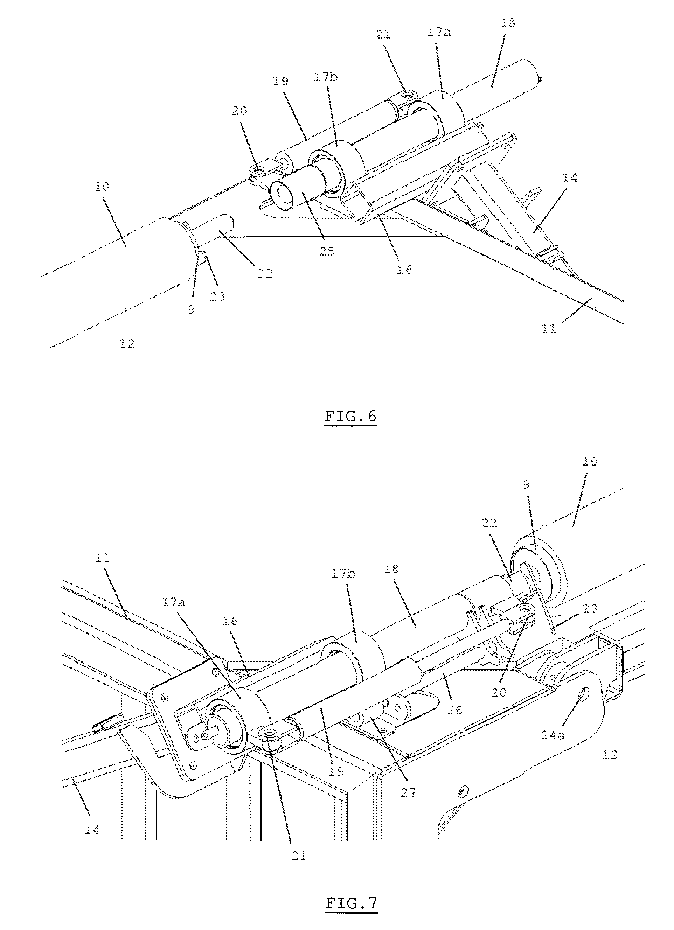

Le déplacement de l'axe **18** pour assurer la connexion ou la déconnexion est piloté par le vérin **19.** Puisque le corps du vérin **19** est fixé au guide de connexion arrière **17a** et que sa tige est fixée à l'axe 1**8,** la rétraction du vérin **19** provoque le déplacement de l'axe **18** vers l'avant de la caisse de chargement **1,** induisant le rétablissement de la connexion arrière entre le tambour enrouleur **9** et le bras oscillant arrière **14.** Inversement, l'étirement du vérin **19** provoque le déplacement de l'axe 18 vers l'arrière, libérant ainsi la connexion arrière. C'est ce qui est illustré dans la Figure **6****.** La commande du vérin **19** lui-même est assurée par un dispositif de puissance idoine, selon que le vérin **19** est du type mécanique, hydraulique, électrique, pneumatique ou autre.

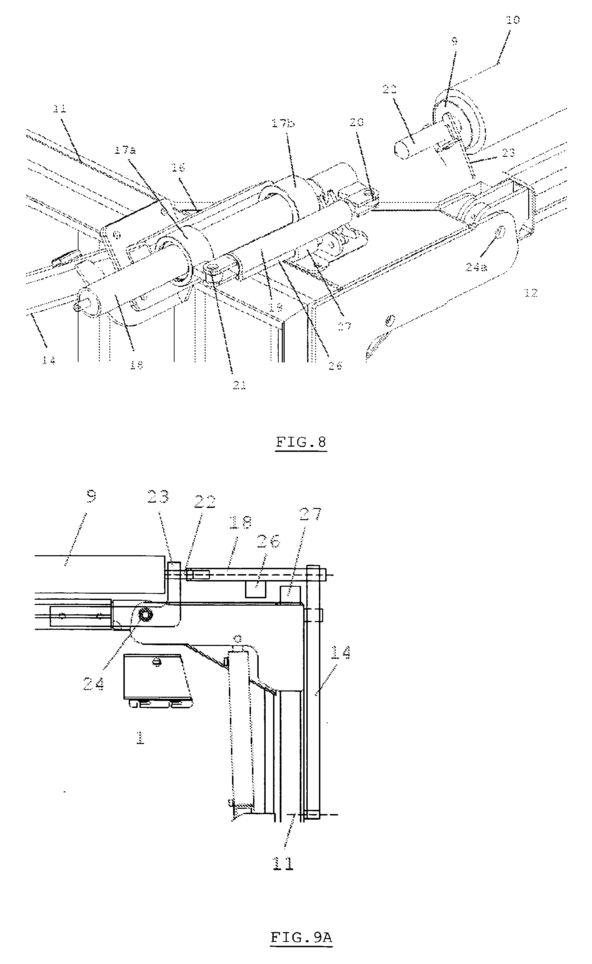

Le dispositif de couverture selon l'invention, en particulier pour son dispositif de connexion arrière, nécessite encore un dispositif de verrouillage du bras oscillant arrière **14.** En effet, lorsque la connexion arrière du bras oscillant **14** au tambour enrouleur 9 est libérée, l'axe de connexion 18 et, partant, le bras oscillant arrière **14** doivent être bloqués dans la position qui permette à la connexion de se reformer ultérieurement, par exemple après ouverture et fermeture de la paroi arrière **11.** Ce dispositif de verrouillage est illustré dans les Figures **7** et **8** où l'on voit, outre les éléments déjà décrits ci-avant, le pêne de verrouillage **26** s'engager dans la gâche de verrouillage **27.** Le pêne de verrouillage **26** étant fixée sur l'axe **18** ou l'embout d'axe 25 et la gâche de verrouillage **27** étant fixée sur le cadre de paroi arrière **11,** le déplacement de l'axe 18 pour libérer la connexion arrière provoque l'engagement du pêne de verrouillage **26** dans la gâche de verrouillage **27,** verrouillant du même coup l'ensemble du dispositif arrière (c'est-à-dire bras et connexion) sur le cadre de paroi arrière **11.** En Figure **7****,** ce verrou est ouvert, en Figure **8** il est fermé.

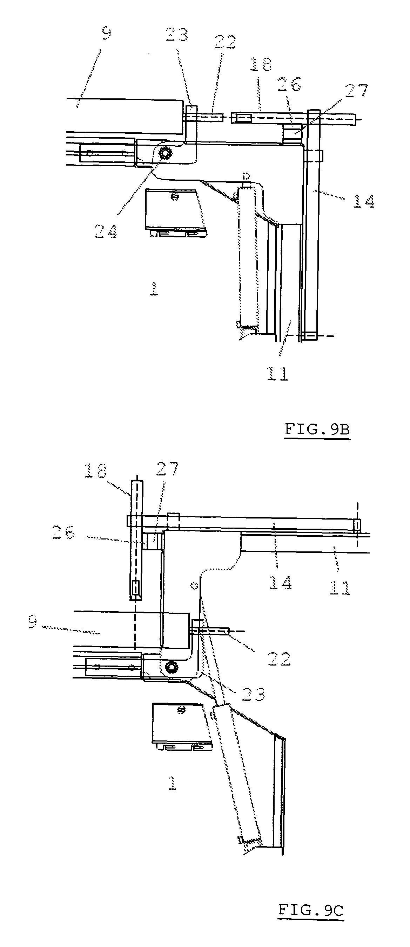

Dans la Figure **9****,** décomposée en Figures **9A****,** **9B** et **9C****,** le déroulement du processus d'ouverture de paroi arrière **11** est illustré de manière schématique en trois phases. En position initiale illustrée en Figure **9A****,** l'axe de connexion arrière **18** enserre l'embout de tambour enrouleur **22** et le pêne de verrouillage 26 n'est pas engagé dans la gâche de verrouillage **27.** Dans cette configuration, le dispositif de couverture peut être actionné pour couvrir la caisse de chargement **1.**

Avant de procéder à l'ouverture de la paroi arrière **11,** la connexion arrière doit être désolidarisée. C'est ce qui est illustré en Figure **9B****.** Ici, l'axe de connexion 18 est désengagé de l'embout de tambour enrouleur **22,** lequel repose à présent sur le support **23.** Par contre, le pêne de verrouillage **26** est à présent engagé dans la gâche de verrouillage **27.** Dans cette configuration, le dispositif de couverture ne peut plus être actionné pour couvrir la caisse de chargement **1** mais la paroi arrière **11** peut être ouverte par pivotement vers le haut autour de ses charnières **24,** lesquelles sont déportées vers l'avant pour offrir un dégagement maximal de la baie de déchargement. Ce faisant, le bras oscillant arrière **14** reste en place malgré la tension du ressort de rappel arrière **15,** car il est bloqué sur le cadre de la paroi arrière **11** par le verrou constitué par l'engagement du pêne **26** dans la gâche **27.**

La Figure **9C** illustre ainsi l'issue du processus où la paroi arrière **11** est en position relevée pour le déchargement de la caisse de chargement **1.**

Dans la présente forme d'exécution, illustrative et donc non limitative, de l'invention, la bâche 10 doit être en position enroulée avant de procéder au déchargement par la paroi arrière ouvrante **11.** Cette configuration est préférée car il n'est traditionnellement pas conseillé de décharger une caisse de transport en vrac bâchée. D'une part, la bâche pourrait gêner le déchargement de la matière transportée, laquelle déborde souvent de la hauteur nominale de la caisse elle-même. D'autre part, le déplacement de la matière lors de son déversement pourrait provoquer des frottements importants sur la bâche, entraînant par exemple une déformation ou une usure de la bâche ou de son dispositif d'enroulement.

Une autre configuration de la présente invention peut néanmoins prévoir aisément que la paroi arrière **11** puisse être ouverte alors que la bâche **10** est en position déroulée, c'est-à-dire avec la caisse **1** couverte. Il suffit pour ce faire de prévoir sur la paroi latérale opposée de la caisse **1** un second support de tambour enrouleur similaire au support **23,** et sur le côté opposé du cadre de paroi arrière ouvrante 11 une gâche de verrouillage similaire à la gâche **27.**

Dans l'exemple d'exécution décrit ci-avant, le dispositif de jonction à angle variable est réalisé de manière intermittente, c'est-à-dire que le tambour enrouleur **9** est déconnecté du bras oscillant arrière **14** pour l'ouverture de la paroi arrière **11.** Toutefois, d'autres types de dispositifs de jonction à angle variable, par exemple des connexions articulées, peuvent être également mises en oeuvre. Les Figures **10A, 10B** et **10C** donnent ainsi respectivement trois exemples de réalisation, la première au moyen d'une connexion articulée à cardan **28,** la deuxième au moyen d'une articulation à doigts **29,** la troisième au moyen d'une articulation semi-rigide en caoutchouc **30.** Tout autre type de dispositif de jonction à angle variable est bien sûr envisageable pour réaliser l'articulation nécessaire au dispositif de couverture-selon l'invention.

Les ressorts de rappel **5** et **15** peuvent tout aussi bien être remplacés par des vérins ou tout dispositif similaire et la position illustrée du dispositif de rappel n'est pas limitative. Par exemple des ressorts concentriques placés sur les seuls axes de rotation **3** et **13** constituent une autre possibilité d'exécution.

Toujours selon l'invention, le pilotage de l'ensemble du processus de couverture, depuis le déclenchement jusqu'à couverture complète de la caisse, couverture tendue, pourrait aussi être entièrement automatisé par un dispositif de commande séquentielle quelconque. Néanmoins, il est de préférence recommandé de conserver la possibilité d'une commande manuelle, par exemple pour arrêter le processus de couverture à mi-course, ou encore pour utiliser la couverture comme déflecteur/récepteur de remplissage. De même le processus d'ouverture de porte arrière peut également être automatisé de manière similaire.

Dans une forme d'exécution préférée de l'invention, le pilotage des fonctions principales est sécurisé à l'aide de capteurs: ceux-ci éviteront par exemple que la paroi arrière **11** de caisse de chargement **1** soit ouverte tant que la connexion arrière du tambour **9** au bras oscillant arrière **14** n'est pas libérée; ou que la bâche **10** soit déroulée alors que justement la connexion arrière du tambour **9** au bras oscillant arrière **14** est libérée; ou encore que la connexion soit libérée alors que l'embout de tambour **22** ne repose pas correctement dans le support **23;** ou encore que l'opérateur continue à actionner le déroulement de la bâche **10** après que le tambour **9** ait atteint la paroi latérale opposée de la caisse de chargement **1;** etc.

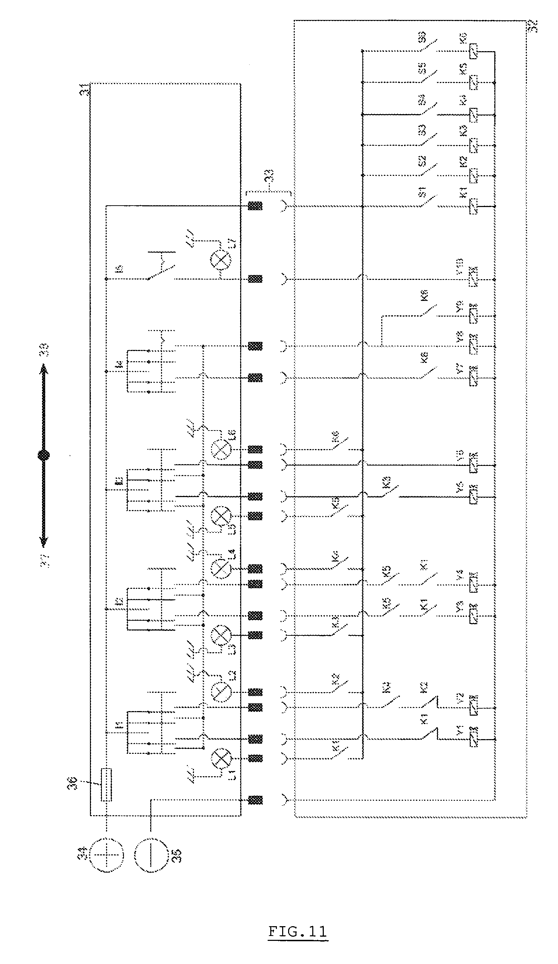

La Figure **11** représente le schéma électrique de commande des fonctions opérationnelles de la caisse de chargement **1** d'une remorque d'ensilage quelconque équipée d'un dispositif de couverture selon l'invention. Le panneau de commande **31** comporte cinq interrupteurs **I1** à **I5** et sept diodes d'état **L1** à **L7.** Les circuits électriques de commandes sont représentés dans le cadre **32.** Les liaisons entre le panneau de commande **31** et les circuits électriques de commande **32** sont réalisés par les câblages et raccords **33 -** représentés schématiquement - et l'alimentation électrique est assurée depuis un générateur de puissance électrique basse tension quelconque via un pôle positif **34** et un pôle négatif **35.** Le système est protégé par un fusible **36.**

Les circuits **32** sont asservis à six capteurs **S1** à S6 commandant six relais **K1** à **K6** pour piloter dix bobines **Y1** à **Y10.**

L'interrupteur **I1** commande l'opération d'enroulement ou de déroulement de la bâche **10** selon qu'il est actionné respectivement dans le sens **37** ou **38.**

L'interrupteur **I2** commande le désengagement ou l'engagement de la connexion arrière entre le tambour enrouleur **9** et le bras oscillant arrière **14,** c'est-à-dire la séparation de l'embout d'axe de connexion **25** de l'embout de tambour **22** ou au contraire leur réemboîtement, selon qu'il est actionné respectivement dans le sens **37** ou **38.**

L'interrupteur **I3** commande l'opération d'ouverture ou de fermeture de la paroi arrière ouvrante **11** selon qu'il est actionné respectivement dans le sens **37** ou **38.**

L'interrupteur **I4** commande l'entraînement d'un fond mouvant quelconque - non représenté dans les figures proposées car non pertinent pour les spécifications de l'invention - essentiellement destiné à déplacer la matière transportée vers l'arrière de la caisse de chargement **1** pour procéder à son déchargement. Selon qu'il est actionné dans le sens **37** ou **38,** l'interrupteur **I4** induit le déplacement du fond mouvant respectivement vers l'avant de la caisse **1 -** par exemple pour éliminer une obstruction au déchargement ou déplacer vers l'avant une charge déposée dans la caisse **1** via la paroi arrière ouvrante **11 -** ou vers l'arrière de la caisse **1.** Dans ce dernier cas, l'interrupteur **I4** comporte une position autobloquante, c'est-à-dire ne nécessitant pas une pression constante de la part de l'opérateur pendant la durée de l'opération.

L'interrupteur **I5** commande l'entraînement dudit fond mouvant quelconque à une seconde vitesse, supérieure à celle induite par l'interrupteur **I4.** Sur une remorque d'ensilage, cette vitesse est utilisée pour terminer le déchargement: la vitesse plus rapide du fond mouvant éjecte les derniers amas de matière. Cette vitesse ne peut être utilisée que lorsque la première vitesse plus lente a déjà été actionnée en basculant l'interrupteur **I4** en sorte que la bobine de tête soit alimentée. Cet interrupteur **I5** n'a donc qu'une direction avec position autobloquante.

La diode **L1** indique à l'opérateur que la bâche **10** est totalement enroulée et que l'embout de tambour enrouleur **22** repose correctement dans son support **23.** La diode **L1** correspond au capteur **S1.**

La diode **L2** indique à l'opérateur que la bâche **10** est totalement déroulée, c'est-à-dire que le tambour enrouleur **9** est parvenu au sommet de la paroi latérale opposée de la caisse de chargement **1.** La diode **L2** correspond au capteur **S2.**

La diode **L3** indique à l'opérateur que la connexion arrière entre le tambour enrouleur **9** et le bras oscillant arrière **14** est correctement engagée, autrement dit que la connexion est verrouillée. La diode **L3** correspond au capteur **S3.**

La diode **L4** indique à l'opérateur que la connexion arrière entre le tambour enrouleur **9** et le bras oscillant arrière **14** est désengagée, et que ce dernier est correctement verrouillé sur le cadre de paroi arrière ouvrante **11** par l'intermédiaire du pêne 26 et de la gâche **27.** La diode **L4** correspond au capteur **S4.**

La diode **L5** indique à l'opérateur que la paroi arrière ouvrante **11** est correctement fermée. La diode **L5** correspond au capteur **S5.**

La diode **L6** indique à l'opérateur que la paroi arrière ouvrante **11** est totalement ouverte. La diode **L6** correspond au capteur **S6.**

La diode L7 indique à l'opérateur que la seconde vitesse de rotation du fond mouvant est actionnée. La diode L7 correspond à l'interrupteur **I5.**

Les circuits des diodes **L1** à **L7** et des capteurs **S1** à **S6** sont alimentés en continu depuis le pôle positif **34**. Bien sûr, les diodes **L1** à **L7** s'allument en fonction de la position du relais **K1** à **K6** correspondant, cette position étant elle-même fonction de l'information relevée par le capteur **S1** à **S6** correspondant auquel le relais est asservi.

Lorsqu'un interrupteur quelconque **I1** à **I4** est commuté, quel que soit le sens **37** ou **38,** le courant électrique est dirigé par une des deux phases vers la bobine de tête **Y8.** Ce n'est pas le cas de l'interrupteur **I5** qui ne peut donc commander sa fonction que si un des interrupteurs **I1** à **I4** (en principe **14)** est basculé.

Dans l'explication qui suit concernant le circuit enclenché par chaque interrupteur, on ne s'attachera donc qu'à la seconde phase de l'interrupteur, la phase unique de l'interrupteur **I5** étant considéré comme telle.

Lorsque l'interrupteur **I1** est commuté dans le sens **37,** le courant passe par le relais **K1.** Celui-ci est asservi au capteur **S1,** lequel vérifie la position de la bâche **10.** Si le capteur **S1** ne repère pas l'embout de tambour **22** dans le support **23,** le courant continue sa course vers la bobine **Y1,** laquelle commande une électrovanne de type quelconque enclenchant le circuit de puissance alimentant les conduites **7** du moteur hydraulique **6** dans le sens de l'enroulement de la bâche **10.** Lorsque le capteur **S1** repère l'embout de tambour **22** dans le support **23,** cela signifie que la bâche **10** est complètement enroulée. Le capteur **S1** inverse alors le relais **K1.** À ce moment, le passage de courant vers la bobine **Y1** est coupé, arrêtant dès lors l'alimentation vers le moteur hydraulique **6,** ce qui a pour effet d'arrêter l'enroulement de la bâche **10;** simultanément, la diode **L1** s'allume, indiquant l'état complètement enroulé de la bâche **10.** Bien entendu, si le relais **K1** est déjà dans cette position avant que l'opérateur actionne l'interrupteur **I1** dans le sens **37,** la diode **L1** est déjà allumée, et il n'y a aucun mouvement du dispositif de couverture.

Lorsque l'interrupteur **I1** est commuté dans le sens **38,** le courant passe d'abord par le relais **K4.** Celui-ci est asservi au capteur **S4,** lequel vérifie si la connexion arrière entre le tambour enrouleur **9** et le bras oscillant arrière **14** est verrouillée. Si tel n'est pas le cas, la bâche **10** ne peut pas être déroulée: le courant s'arrête et il n'y a pas de mouvement. Si la connexion arrière est bien verrouillée, le courant continue sa course vers le relais **K2.** Celui-ci est asservi au capteur **S2,** lequel vérifie si le bras oscillant avant **4** est arrivé en bout de course. Si le capteur **S2** ne repère pas la présence du bras oscillant avant **4** en bout de rotation, le courant continue sa course vers la bobine **Y2,** laquelle commande une électrovanne de type quelconque enclenchant le circuit de puissance alimentant les conduites **7** du moteur hydraulique **6** dans le sens du déroulement de la bâche **10.** Lorsque le capteur **S2** repère la présence du bras oscillant avant **4** en bout de rotation, cela signifie que la bâche **10** est complètement déroulée. Le capteur **S2** inverse alors le relais **K2.** À ce moment, le passage de courant vers la bobine **Y2** est coupé, arrêtant dès lors l'alimentation vers le moteur hydraulique **6,** ce qui a pour effet d'arrêter le déroulement de la bâche **10;** simultanément, la diode **L2** s'allume, indiquant l'état complètement déroulé de la bâche **10.** Bien entendu, si le relais **K2** était déjà dans cette position avant que l'opérateur actionne l'interrupteur **I1** dans le sens **38,** la diode **L2** est déjà allumée, et il n'y a aucun mouvement du dispositif de couverture.

Lorsque l'interrupteur **I2** est commuté dans le sens **37,** le courant passe d'abord par le relais **K5.** Celui-ci est asservi au capteur **S5,** lequel vérifie si la paroi arrière ouvrante **11** est fermée. Si le capteur **S5** ne repère pas cet état, le courant ne passe pas et il n'y a pas de mouvement. Si le capteur **S5** repère que la paroi arrière ouvrante **11** est bien fermée, le courant continue sa course vers le relais **K1.** Celui-ci est asservi au capteur **S1,** lequel vérifie la position de la bâche **10.** Si le capteur **S1** ne repère pas l'embout de tambour **22** dans le support **23,** le courant s'arrête et il n'y a pas de mouvement. Si le capteur **S1** repère bien l'embout de tambour **22** dans le support **23,** le courant continue sa course vers la bobine **Y3,** laquelle commande une électrovanne de type quelconque enclenchant le circuit de puissance alimentant le vérin de pilotage de connexion arrière **19** dans le sens du retrait de l'axe de connexion **18.** Lorsque le capteur **S3** repère que le pêne **26** est engagée entièrement dans la gâche **27,** cela signifie que le bras oscillant arrière **14** est correctement verrouillé sur le cadre de paroi arrière ouvrante **11.** Le capteur **S3** inverse alors le relais **K3.** À ce moment, la diode **L3** s'allume, indiquant l'état libéré de la connexion arrière entre le tambour enrouleur **9** et le bras oscillant arrière **14,** ce dernier étant maintenant correctement verrouillé sur le cadre de paroi arrière ouvrante **11.** Ceci informe l'opérateur qu'il peut lâcher l'interrupteur **12,** ce qui aura pour effet d'arrêter le circuit. Bien entendu, si le relais **K3** était déjà dans cette position avant que l'opérateur actionne l'interrupteur **I2** dans le sens **37,** la diode **L3** est déjà allumée et l'opérateur sait qu'il n'a pas à effectuer cette opération.

Lorsque l'interrupteur **I2** est commuté dans l'autre sens **38,** le courant emprunte le même circuit, avec les mêmes effets, passant d'abord par le relais **K5** puis le relais **K1** pour parvenir jusqu'à la bobine **Y4,** laquelle commande une électrovanne de type quelconque enclenchant le circuit de puissance alimentant le vérin de pilotage de connexion arrière **19** dans le sens de la rentrée de l'axe de connexion **18** vers l'embout de tambour **22.** Lorsque le capteur **S4** repère que l'embout d'axe de connexion **25** est engagé entièrement et correctement autour de l'embout de tambour **22,** cela signifie que le bras oscillant arrière **14** est correctement connecté au tambour enrouleur **9.** Le capteur **S4** inverse alors le relais **K4.** À ce moment, la diode **L4** s'allume, indiquant l'état fermé de la connexion arrière entre le tambour enrouleur **9** et le bras oscillant arrière **14.** Ceci informe l'opérateur qu'il peut lâcher l'interrupteur **12,** ce qui aura pour effet d'arrêter le circuit. Bien entendu, si le relais **K4** était déjà dans cette position avant que l'opérateur actionne l'interrupteur **I2** dans le sens **38,** la diode **L4** est déjà allumée et l'opérateur sait qu'il n'a pas à effectuer cette opération.

Lorsque l'interrupteur **I3** est commuté dans le sens **37,** le courant passe d'abord par le relais **K3.** Celui-ci est asservi au capteur **S3,** lequel vérifie si le bras oscillant arrière **14** est verrouillé sur le cadre de paroi arrière ouvrante **11.** Si le capteur **S3** ne repère pas cet état, le courant ne passe pas et il n'y a pas de mouvement. Si le capteur **S3** repère que le bras oscillant arrière **14** est bien verrouillé sur le cadre de paroi arrière ouvrante **11,** c'est-à-dire que le pêne de verrou **26** est bien engagé dans la gâche de verrou **27,** le courant continue sa course vers la bobine **Y5,** laquelle commande une électrovanne de type quelconque enclenchant le circuit de puissance alimentant l'organe quelconque de basculement de la paroi arrière ouvrante **11** dans le sens de l'ouverture. Lorsque le capteur **S6** repère que la paroi arrière ouvrante **11** est entièrement ouverte, autrement dit qu'elle est en fin de course, le capteur **S6** inverse alors le relais **K6.** À ce moment, la diode **L6** s'allume, indiquant l'état totalement ouvert de la paroi arrière ouvrante **11.** Ceci informe l'opérateur qu'il peut lâcher l'interrupteur **13,** ce qui aura pour effet d'arrêter le circuit. Bien entendu, si le relais **K6** était déjà dans cette position avant que l'opérateur actionne l'interrupteur **I3** dans le sens **37,** la diode **L6** est déjà allumée et l'opérateur sait qu'il n'a pas à effectuer cette opération.

Lorsque l'interrupteur **I3** est commuté dans le sens **38,** le courant passe directement vers la bobine **Y6,** laquelle commande une électrovanne de type quelconque enclenchant le circuit de puissance alimentant l'organe quelconque de basculement de la paroi arrière ouvrante **11** dans le sens de la fermeture. Lorsque le capteur **S5** repère que la paroi arrière ouvrante **11** est entièrement fermée, autrement dit qu'elle est en fin de course vers le bas, le capteur **S5** inverse alors le relais **K5.** À ce moment, la diode **L5** s'allume, indiquant l'état totalement fermé de la paroi arrière ouvrante **11.** Ceci informe l'opérateur qu'il peut lâcher l'interrupteur **13,** ce qui aura pour effet d'arrêter le circuit. Bien entendu, si le relais **K5** était déjà dans cette position avant que l'opérateur actionne l'interrupteur **I3** dans le sens **38,** la diode **L5** est déjà allumée et l'opérateur sait qu'il n'a pas à effectuer cette opération.

Lorsque l'interrupteur **I4** est commuté dans le sens **37,** le courant passe d'abord par le relais **K6.** Celui-ci est asservi au capteur **S6,** lequel vérifie si la paroi arrière ouvrante **11** est totalement ouverte. Si le capteur **S6** ne repère pas cet état, le courant ne passe pas et il n'y a pas de mouvement. Si le capteur **S6** repère que la paroi arrière ouvrante **11** est bien ouverte, le courant continue sa course vers la bobine **Y7,** laquelle commande une électrovanne de type quelconque enclenchant le circuit de puissance alimentant l'organe quelconque d'entraînement de la rotation du fond mouvant de la caisse de chargement **1** en marche arrière du fond - c'est-à-dire que le fond mouvant se déplace vers l'avant de la caisse de chargement **1.** L'opérateur maintient l'interrupteur **I4** dans cet état le temps nécessaire à l'opération qu'il veut réaliser. Lorsqu'il relâche l'interrupteur **14,** le circuit s'arrête et le fond mouvant est immobilisé.

Lorsque l'interrupteur **I4** est commuté dans le sens 38, le courant passe aussi par le relais **K6** asservi au capteur **S6,** lequel vérifie si la paroi arrière ouvrante **11** est totalement ouverte. Si le capteur **S6** ne repère pas cet état, le courant ne passe pas et il n'y a pas de mouvement. Si le capteur **S6** repère que la paroi arrière ouvrante **11** est bien ouverte, le courant continue sa course vers la bobine **Y9,** laquelle commande une électrovanne de type quelconque enclenchant le circuit de puissance alimentant l'organe quelconque d'entraînement de la rotation du fond mouvant de la caisse de chargement **1** en marche avant du fond - c'est-à-dire que le fond mouvant se déplace vers l'arrière de la caisse de chargement **1.** Dans cette direction, l'interrupteur **I4** se bloque dans cette position parce qu'elle correspond au déchargement de la caisse **1** et qu'en principe rien n'est sensé entraver ce déchargement. Lorsque l'opérateur ramène l'interrupteur **I4** en position neutre, le circuit s'arrête et le fond mouvant est immobilisé. Ici on a cité la commande d'un fond mouvant à titre d'exemple. Dans l'esprit de l'invention, le propos s'applique tout aussi bien à la commande d'une paroi pousseuse, du bennage ou de tout autre dispositif de déchargement.

Pour que la commutation de l'interrupteur **I5** dans la direction **38** produise un effet, l'interrupteur **I4** doit être commuté également - en pratique, il sera bloqué dans le sens **38** également - afin que la bobine de tête **Y8** soit alimentée et que le fond mouvant soit entraîné - en pratique dans le sens du déchargement de la caisse de chargement **1.** L'interrupteur **I5** alimente alors la bobine **Y10,** ce qu'indique l'illumination concomitante de la diode **L7.** La bobine **Y10** commande l'augmentation du débit du circuit de puissance alimentant l'organe quelconque d'entraînement de la rotation du fond mouvant, ce qui n'aura d'effet que si cet organe était déjà alimenté via l'électrovanne commandée par l'interrupteur **I4.**

L'homme de l'art se rendra compte que la position des capteurs et l'organisation des circuits ne sont pas déterminantes pour l'invention. De multiples autres positions des capteurs permettront également de vérifier les mêmes états pour sécuriser les mêmes fonctions, même avec un schéma électrique différent. Par contre, la sécurisation du dispositif de couverture selon l'invention aux moyens d'un dispositif de capteurs est bien une caractéristique dépendante de la présente invention.

Nonobstant le fait que la présente invention a été décrite au moyen d'une description détaillée dans laquelle différentes variantes d'exécution et différents aspects de l'invention ont été décrits, l'homme de l'art verra que la portée complète de l'invention n'est nullement limitée aux exemples présentés ici. L'invention a une portée qui est proportionnelle aux revendications du présent brevet, incluant tous éléments ou aspects qui seraient considérés comme équivalents à ceux exposés dans les revendications dépendantes.

### Liste des repères

1. Caisse de chargement
2. Support de dispositif avant
3. Axe de rotation avant
4. Bras oscillant avant
5. Ressort de rappel avant
6. Moteur hydraulique
7. Conduites vers dispositif de puissance
8. Frein asservi
9. Tambour enrouleur de bâche
10. Bâche
11. Paroi arrière ouvrante
12. Support de dispositif arrière
13. Axe de rotation arrière
14. Bras oscillant arrière
15. Ressort de rappel arrière
16. Support de connexion arrière
17.
   a. Guide de connexion arrière
   b. Guide de connexion arrière
18. Axe de connexion arrière
19. Vérin de pilotage de connexion arrière
20. Fixation de vérin à l'axe de connexion arrière
21. Fixation de vérin au guide de connexion arrière
22. Embout arrière de tambour enrouleur
23. Support de tambour enrouleur
24.
   a. Charnière droite de paroi arrière ouvrante
   b. Charnière gauche de paroi arrière ouvrante
25. Embout d'axe de connexion
26. Pêne de verrou
27. Gâche de verrou
28. Articulation à cardan
29. Articulation à doigts
30. Jonction caoutchouc flexible
31. Panneau de commande électrique
32. Circuits électriques de la caisse de chargement
33. Câblage et raccords
34. Pôle positif
35. Pôle négatif
36. Fusible
37. Premier sens des interrupteurs
38. Second sens des interrupteurs

### Liste des repères d'organes électriques

I1. Interrupteur d'enroulement / déroulement de la bâche
I2. Interrupteur d'ouverture / fermeture de la connexion arrière du tambour enrouleur
I3. Interrupteur d'ouverture / fermeture de la porte
I4. Interrupteur de commande du fond mouvant de la caisse de chargement
I5. Interrupteur de commande du fond mouvant de la caisse de chargement à une seconde vitesse.

S1. Capteur de bâche enroulée
S2. Capteur de bâche déroulée
S3. Capteur de connexion arrière ouverte
S4. Capteur de connexion arrière fermée
S5. Capteur de paroi arrière fermée
S6. Capteur de paroi arrière ouverte

L1. Diode indicative d'état de bâche enroulée
L2. Diode indicative d'état de bâche déroulée
L3. Diode indicative d'état de connexion arrière ouverte
L4. Diode indicative d'état de connexion arrière fermée
L5. Diode indicative d'état de paroi arrière fermée
L6. Diode indicative d'état de paroi arrière ouverte
L7. Diode indicative d'état de seconde vitesse du fond mouvant

K1. Relais
K2. Relais
K3. Relais
K4. Relais
K5. Relais
K6. Relais

Y1. Bobine d'enroulement de la bâche
Y2. Bobine de déroulement de la bâche
Y3. Bobine d'ouverture de la connexion arrière
Y4. Bobine de fermeture de la connexion arrière
Y5. Bobine d'ouverture de paroi arrière
Y6. Bobine de fermeture de paroi arrière
Y7. Bobine de marche inversée du fond mouvant
Y8. Bobine de tête
Y9. Bobine de marche du fond mouvant au déchargement
Y10. Bobine de marche du fond mouvant à la seconde vitesse

## Revendications

1. Moyen de transport comprenant une caisse de chargement (1) ouverte dans sa partie supérieure et munie d'une paroi avant, d'une paroi arrière ouvrante (11), de deux parois latérales, ainsi que d'un dispositif de couverture comportant :
- une couverture enroulante (10) sur un dispositif d'enroulement longitudinal à tambour (9), lui-même fixé sur deux bras (4, 14) montés pivotants autour d'axes (3, 13) attachés respectivement à ou à hauteur de la paroi avant et à ou à hauteur de la paroi arrière (11) de ladite caisse (1),
- dispositif de rappel (5, 15) tirant chaque bras pivotant (4, 14) soit dans le sens de la fermeture, soit dans le sens de l'ouverture de l'espace de chargement de la caisse (1),
- un dispositif de puissance (6, 7) actionnant ledit dispositif d'enroulement (9) pour recouvrir ou découvrir l'espace de chargement de la caisse (1),
**caractérisé en ce que** le dispositif de couverture comprend un dispositif de jonction, intermittent ou permanent, à angle variable (16, 17a, 17b, 18, 19, 22, 25, 28, 29, 30), entre le bras pivotant (14) monté sur ou à hauteur de la paroi arrière ouvrante (11) et l'axe du dispositif d'enroulement longitudinal à tambour (9), ledit dispositif de jonction à angle variable assurant un débattement angulaire dudit bras pivotant (14) par rapport audit axe du dispositif d'enroulement longitudinal à tambour (9), lors de l'ouverture de la paroi arrière ouvrante(11).

2. Moyen de transport selon la revendication 1, **caractérisé en ce que** le dispositif de puissance (6, 7) est équipé d'un frein asservi (8) maintenant l'espace de chargement respectivement ouvert, semi-ouvert ou fermé, contre la tension du dispositif de rappel (5, 15) selon que celle-ci est dans le sens de la fermeture ou de l'ouverture de l'espace de chargement de la caisse (1).

3. Moyen de transport selon la revendication 1 ou 2, **caractérisé en ce que** le dispositif de couverture est configuré pour que, le dispositif d'enroulement (9) étant initialement positionné avec sa couverture (10) enroulée, respectivement déroulée, au sommet d'une des parois latérales de la caisse de chargement (1), le dispositif de puissance (6, 7) puisse être commuté, en relâchant optionnellement le frein (8), pour actionner le dispositif d'enroulement (9) dans le sens du déroulement, respectivement de l'enroulement, le dispositif de rappel (5, 15) attirant les bras pivotants (4, 14) vers l'autre paroi latérale de la caisse, de manière à dérouler, respectivement enrouler, simultanément la couverture (10), éventuellement partiellement entre les deux parois latérales, de manière contrôlée.

4. Moyen de transport selon la revendication 1, **caractérisé en ce que** le dispositif de jonction à angle variable est réalisé intermittent grâce à des moyens de désolidarisation (16, 17a, 17b, 18, 19, 22, 23, 25) du dispositif d'enroulement (9) par rapport au bras pivotant (14) fixé sur la paroi arrière ouvrante (11).

5. Moyen de transport selon la revendication 4, **caractérisé en ce que** lesdits moyens de désolidarisation comprennent un berceau support de tambour (23) et une connexion coulissante (17a, 17b, 18, 19) entre un embout arrière (22) du tambour d'enroulement (9) et l'extrémité (16) du bras pivotant arrière (14).

6. Moyen de transport selon la revendication 5, **caractérisé en ce que** la connexion coulissante comprend un axe de connexion arrière (18, 25) apte à se déplacer en avant et en arrière sous l'action d'un vérin (19) dont le corps est fixé à un guide de connexion arrière (17a) de l'axe de connexion arrière (18, 25), lequel guide est solidaire de l'extrémité (16) du bras pivotant arrière (14) et dont la tige est fixée à l'axe de connexion arrière (18), le déplacement dudit axe (18) vers l'avant de la caisse de chargement (1), suite à la rétraction du vérin (19), établissant la connexion entre le tambour enrouleur (9) et le bras pivotant arrière (14) et le déplacement dudit axe de connexion (18) vers l'arrière de la caisse de chargement (1), suite à l'étirement du vérin (19), libérant ladite connexion.

7. Moyen de transport selon la revendication 6, **caractérisé en ce que** l'embout de tambour arrière (22) est apte à pénétrer un embout (25) de l'axe de connexion arrière (18), l'embout de tambour arrière (22) ayant une forme mâle conique et arrondie à son extrémité et l'embout d'axe de connexion arrière (25) ayant une forme femelle conique et arrondie inverse, faisant office d'entonnoir d'alignement lorsque l'embout de tambour arrière (22) pénètre dans l'embout de l'axe de connexion arrière (25).

8. Moyen de transport selon la revendication 1, **caractérisé en ce que** le dispositif de couverture comporte en outre un dispositif de verrouillage du bras pivotant arrière (14) dans une position qui permette à la connexion avec le tambour (9) de se reformer ultérieurement, ledit dispositif de verrouillage comprenant un pêne (26) fixé sur l'axe de connexion arrière (18) et apte à s'engager dans une gâche (27) fixée sur la paroi arrière (11).

9. Moyen de transport selon la revendication 5, **caractérisé en ce que**, lorsque l'embout (22) et l'extrémité (16) du bras pivotant arrière (14) sont connectés, le bras pivotant (14) est apte à guider la bâche (10) en la déroulant ou en l'enroulant, selon le cas, vers l'autre paroi latérale de la caisse (1).

10. Moyen de transport selon la revendication 1, **caractérisé en ce que** le dispositif de jonction à angle variable est réalisé permanent par un dispositif de jonction articulée (28, 29, 30) rendant solidaires le dispositif d'enroulement (9) et le bras pivotant arrière (14).

11. Moyen de transport selon la revendication 10, **caractérisé en ce que** le dispositif de jonction articulée est un arbre muni d'une articulation à cardan (28) ou à doigts (29) ou encore à jonction semi-rigide en élastomère (30).

12. Moyen de transport selon la revendication 1, **caractérisé en ce que** la paroi arrière (11) est montée soit pour permettre une ouverture par battement latéral simple ou multiple, par oscillation verticale vers le haut et vers le bas, par soulèvement vertical ou quasi-vertical ou par pivotement vers le haut autour de charnières (24a, 24b) déportées ou non vers l'avant de la caisse (1).

13. Moyen de transport selon la revendication 1, **caractérisé en ce que** le dispositif de rappel (5, 15) à l'avant et à l'arrière de la caisse (1) comprend un ressort de rappel ou un vérin.

14. Moyen de transport selon la revendication 1, **caractérisé en ce qu'**il comprend des moyens automatisés pour assurer le pilotage de l'ensemble du processus de couverture, depuis le déclenchement jusqu'à la couverture complète de la caisse (1) avec la bâche tendue (10) et vice-versa.

15. Moyen de transport selon la revendication 14, **caractérisé en ce que** lesdits moyens automatisés comprennent des circuits électriques de commande (32) asservis à des capteurs (S1 à S6) commandant des relais (K1 à K6) pour piloter des bobines (Y1 à Y10), commandant à leur tour des électrovannes enclenchant chacune un circuit de puissance.

16. Moyen de transport selon la revendication 15, **caractérisé en ce qu'**il comporte un panneau de commande à distance (31), muni d'interrupteurs (I1 à I5) et de diodes indicatives d'état (L1 à L7) et connecté par des câblages et raccords (33) au circuits de commande précités (32), permettant à un opérateur d'enclencher et vérifier la séquence d'exécution des fonctions respectives d'enroulement/ déroulement de la bâche, d'ouverture/fermeture de la connexion arrière du tambour enrouleur, d'ouverture/fermeture de la paroi arrière, de commande respectivement d'un fond mouvant, d'une paroi pousseuse, du bennage ou de tout autre dispositif de déchargement de la caisse de chargement à une première vitesse et de commande respectivement d'un fond mouvant, d'une paroi pousseuse, du bennage ou de tout autre dispositif de déchargement de la caisse de chargement à une seconde vitesse.

17. Moyen de transport selon la revendication 15, **caractérisé en ce que** les capteurs (S1 à S6) sont aptes à vérifier respectivement si la bâche est en position enroulée, si la bâche est en position déroulée, si la connexion arrière est ouverte, si la connexion arrière est fermée, si la paroi arrière est fermée et si la paroi arrière est ouverte.

18. Moyen de transport selon la revendication 16, **caractérisé en ce que** les diodes (L1 à L7) indiquent respectivement les états de bâche enroulée et déroulée, de connexion arrière ouverte et fermée et de paroi arrière fermée et ouverte.

19. Moyen de transport pour déplacement sur route, rail ou terrain naturel, notamment agricole ou minier, selon l'une quelconque des revendications précédentes.

20. Moyen de transport selon la revendication 19, **caractérisé en ce que** le moyen de transport est une remorque de chargement par soufflage ou déversement dans la caisse, telle qu'une remorque d'ensilage, une benne basculante, une remorque à paroi pousseuse ou un épandeur de matières.

## Claims

1. A transport means comprising a cargo box (1) that is open in its upper portion and provided with a front wall, an opening rear wall (11), two side walls, as well as a covering device comprising:
- a rolling cover (10) on a longitudinal-winding drum device (9), which in turn is fixed on two arms (4,14) pivotably mounted around axes (3,13) attached to or at the level of the front wall and attached to or at the level of the rear wall (11), respectively, of said box (1),
- a return device (5,15) pulling each pivoting arm (4,14) either in the closing direction, or in the opening direction of the cargo space of the box (1),
- a power device (6,7) actuating said winding device (9) in order to cover or expose the cargo space of the box (1),
**characterized in that** the covering device comprises a intermittent or permanent junction device with variable angle (16,17a,17b,18,19,22,25,28,29,30) between the pivoting arm (14) mounted on or at the level of the opening rear wall (11) and the axis of the longitudinal-winding drum device (9), said junction device with variable angle ensuring the angular movement of said pivoting arm (14) relative to said axis of the longitudinal-winding drum device (9), when the opening rear wall (11) is being opened.

2. Transport means according to Claim 1, **characterized in that** the power device (6,7) is equipped with a servo-brake (8) that maintains the cargo space open, semi-open or closed, respectively, against the tension of the return device (5,15) depending on whether the latter is in the closed or open direction of the cargo space of the box (1).

3. Transport means according to Claim 1 or 2, **characterized in that** the covering device is configured so that, the winding device (9) being initially positioned with its cover (10) that is wound or unwound, respectively, at the top of one of the side walls of the cargo box (1), the power device (6,7) can be switched, by optionally releasing the brake (8), to actuate the winding device (9) in the unwinding or winding direction, respectively, the return device (5,15) drawing the pivoting arms (4,14) toward the other side wall of the box, so as to simultaneously unwind or wind, respectively, the cover (10) in a controlled manner, possibly partially between both side walls.

4. Transport means according to Claim 1, **characterized in that** the junction device with variable angle is made intermittent owing to separating means (16,17a,17b 18,19,22,23,25) of the winding device (9) relative to the pivoting arm (14) fixed on the opening rear wall (11).

5. Transport means according to Claim 4, **characterized in that** said separating means comprise a drum-support cradle (23) and a sliding connection (17a,17b,18,19) between a rear tip (22) of the winding drum (9) and the end (16) of the rear pivoting arm (14).

6. Transport means according to Claim 5, **characterized in that** the sliding connection comprises a rear connecting axis (18,25) that can move forward and backward under the action of a jack (19), the body of which is fixed to a rear connecting guide (17a) of the rear connecting axis (18,25), said guide being secured to the end (16) of the rear pivoting arm (14) and the shaft of which is fixed to the rear connecting axis (18), the movement of said axis (18) toward the front of the cargo box (1), due to the retraction of the jack (19), establishing the connection between the winding drum (9) and the rear pivoting arm (14) and the movement of said connecting axis (18) toward the rear of the cargo box (1), due to the stretching of the jack (19), freeing said connection.

7. Transport means according to Claim 6, **characterized in that** the tip of the rear drum (22) can penetrate a tip (25) of the rear connecting axis (18), the tip of the rear drum (22) having a conical and rounded male shape at its end and the tip of the rear connecting axis (25) having a conical female shape with opposite rounding, serving as an alignment funnel when the rear drum tip (22) penetrates the tip of the rear connecting axis (25).

8. Transport means according to Claim 1, **characterized in that** the covering device also comprises a device for locking the rear pivoting arm (14) in a position that allows the connection with the drum (9) to subsequently reform, said locking device comprising a bolt (26) fixed on the rear connecting axis (18) and able to engage in a strike (27) fixed on the rear wall (11).

9. Transport means according to Claim 5, **characterized in that**, when the tip (22) and the end (16) of the rear pivoting arm (14) are connected, the pivoting arm (14) can guide the canvas sheet (10) by winding or unwinding it, depending on the case, toward the other side wall of the box (1).

10. Transport means according to Claim 1, **characterized in that** the junction device with variable angle is made permanent by an articulated junction device (28,29,30) securing the winding device (9) and the rear pivoting arm (14).

11. Transport means according to Claim 10, **characterized in that** the articulated junction device is a shaft provided with a cardan joint (28) or a finger joint (29) or even a semi-rigid elastomer articulation junction (30).

12. Transport means according to Claim 1, **characterized in that** the rear wall (11) is mounted either to allow an opening by single or multiple lateral travel, by upward and downward vertical oscillation, by vertical or almsot-vertical lifting, or by upward pivoting around hinges (24a,24b) that may or may not be offset toward the front of the box (1).

13. Transport means according to Claim 1, **characterized in that** the return device (5,15) at the front and rear of the box (1) comprises a return spring or a jack.

14. Transport means according to Claim 1, **characterized in that** it comprises automated means to ensure the steering of the entire covering process, from the triggering until the complete covering of the box (1) with the canvas sheet (10) being stretched and vice versa.

15. Transport means according to Claim 14, **characterized in that** said automated means comprise electric control circuits (32) driven by sensors (S1 to S6) controlling relays (K1 to K6) to steer coils (Y1 to Y10), which in turn control solenoids, triggering each a power circuit.

16. Transport means according to Claim 15, **characterized in that** it comprises a remote control panel (31), provided with switches (I1 to I5) and status-indicating diodes (L1 to L7) and connected by cables and connectors (33) to the aforementioned control circuits (32), allowing an operator to trigger and verify the execution sequence of the respective functions of winding/unwinding the canvas sheet, opening/closing the rear connection of the winding drum, opening/closing the rear wall, controlling a moving bottom, a pusher wall, a driving wall or any other device for unloading the cargo box at a first speed, respectively, and controlling a moving bottom, a pushing wall, a driving wall or any other device for unloading the cargo box at a second speed, respectively.

17. Transport means according to Claim 15, **characterized in that** the sensors (S1 to S6) can verify if the canvas sheet is in the wound position, if the canvas sheet is in the unwound position, if the rear connection is open, if the rear connection is closed, if the rear wall is closed, and if the rear wall is open, respectively.

18. Transport means according to Claim 16, **characterized in that** the diodes (L1 to L7) indicate the status of the wound and unwound canvas sheet, open and closed rear connection, and closed and open rear wall, respectively.

19. A transport means for traveling on road, rail or natural ground, in particular agricultural ground or mining property, according to any one of the preceding claims.

20. Transport means according to Claim 19, **characterized in that** the transport means is a trailer for loading by blowing or pouring into the box, such as a silaging trailer, a tilting skip, a trailer with pushing wall, or a material spreader.

## Patentansprüche

1. Transportmittel, das einen in seinem oberen Abschnitt offenen Ladebehälter (1) umfasst, der mit einer vorderen Wand, einer öffnenden hinteren Wand (11), zwei Seitenwänden sowie mit einer Abdeckvorrichtung ausgestattet ist, die aufweist:
- eine Wickelabdeckung (10) auf einer länglichen Wickelvorrichtung mit Trommel (9), die selbst auf zwei Armen (4, 14) befestigt ist, die drehbar um Achsen (3, 13) montiert sind, die jeweils an oder in Höhe der vorderen Wand und an oder in Höhe der hinteren Wand (11) des Behälters (1) angebracht sind,
- Rückholvorrichtung (5, 15), die jeden Schwenkarm (4, 14) entweder in die Richtung des Verschlusses oder in die Richtung des Öffnens des Laderaums des Behälters (1) zieht,
- eine Arbeitsvorrichtung (6, 7), die die Wickelvorrichtung (9) betätigt, um den Laderaum des Behälters (1) abzudecken oder aufzudecken,
**dadurch gekennzeichnet, dass** die Abdeckvorrichtung eine zeitweilige oder ständige Verbindungsvorrichtung mit variablem Winkel (16, 17a, 17b, 18, 19, 22, 25, 28, 29, 30) zwischen dem Schwenkarm (14) umfasst, der auf oder in Höhe der öffnenden hinteren Wand (11) und der Achse der länglichen Wickelvorrichtung mit Trommel (9) montiert ist, wobei die Verbindungsvorrichtung mit variablem Winkel eine Winkelbewegung des Schwenkarms (14) im Verhältnis zur Achse der länglichen Wickelvorrichtung mit Trommel (9) bei Öffnen der öffnenden hinteren Wand (11) gewährleistet.

2. Transportmittel nach Anspruch 1, **dadurch gekennzeichnet, dass** die Arbeitsvorrichtung (6, 7) mit einer lastabhängigen Bremse (8) ausgestattet ist, die den Laderaum gegen die Spannung der Rückholvorrichtung (5, 15) jeweils geöffnet, halb geöffnet oder geschlossen hält, je nachdem, ob diese in Richtung des Schließens oder des Öffnens des Laderaums des Behälters (1) ist.

3. Transportmittel nach Anspruch 1 oder 2, **dadurch gekennzeichnet, dass** die Abdeckvorrichtung konfiguriert ist, damit, wobei die Wickelvorrichtung (9) zunächst mit ihrer jeweils aufgewickelten oder abgewickelten Abdeckung (10) an der Spitze einer der Seitenwände des Ladebehälters (1) positioniert ist, die Arbeitsvorrichtung (6, 7) umschaltbar ist, so dass sie die Bremse (8) optional freigibt, um die Wickelvorrichtung (9) in Richtung Abwickeln beziehungsweise Aufwickeln zu betätigen, wobei die Rückholvorrichtung (5, 15) die Schwenkarme (4, 14) zu der anderen Seitenwand des Behälters zieht, um gleichzeitig, eventuell teilweise zwischen den zwei Seitenwänden, die Abdeckung (10) kontrolliert abzuwickeln beziehungsweise aufzuwickeln.

4. Transportmittel nach Anspruch 1, **dadurch gekennzeichnet, dass** die Verbindungsvorrichtung mit variablem Winkel dank der Trennmittel (16, 17a, 17b, 18, 19, 22, 23, 25) der Wickelvorrichtung (9) im Verhältnis zum auf der öffnenden hinteren Wand (11) befestigten Schwenkarm (14) zeitweilig realisiert ist.

5. Transportmittel nach Anspruch 4, **dadurch gekennzeichnet, dass** die Trennmittel ein Trommeltraggestell (23) und eine Gleitverbindung (17a, 17b, 18, 19) zwischen einem hinteren. Ansatz der (22) der Wickeltrommel (9) und dem Ende (16) des hinteren Schwenkarms (14) umfassen.

6. Transportmittel nach Anspruch 5, **dadurch gekennzeichnet, dass** die Gleitverbindung eine hintere Verbindungsachse (18, 25) umfasst, die imstande ist, sich unter Einwirkung eines Zylinders (19) nach vorn und nach hinten zu bewegen, dessen Körper an einer hinteren Verbindungsführung (17a) der hinteren Verbindungsachse (18, 25) befestigt ist, wobei die Führung mit dem Ende (16) des hinteren Schwenkarms (14) verbunden ist und die Stange an der hinteren Verbindungsachse (18) befestigt ist, wobei die Verschiebung der Achse (18) in die vordere Richtung des Ladebehälters (1), nach Einziehen des Zylinders (19), die Verbindung zwischen der Wickeltrommel (9) und dem hinteren Schwenkarm (14) herstellt und die Verschiebung der Verbindungsachse (18) in die hintere Richtung des Ladebehälters (1), infolge des Ausfahrens des Zylinders (19), die Verbindung freigibt.

7. Transportmittel nach Anspruch 6, **dadurch gekennzeichnet, dass** der hintere Trommelansatz (22) imstande ist, in einen Ansatz (25) der hinteren Verbindungsachse (18) einzudringen, wobei der hintere Trommelansatz (22) eine konische männliche, an seinem Ende abgerundete Form hat und der Ansatz der hinteren Verbindungsachse (25) eine konische weibliche, umgekehrt abgerundete Form hat, die als Ausrichtung fungiert, wenn der hintere Trommelansatz (22) in den Ansatz (25) der hinteren Verbindungsachse eindringt.

8. Transportmittel nach Anspruch 1, **dadurch gekennzeichnet, dass** die Abdeckvorrichtung weiterhin eine Verriegelungsvorrichtung des hinteren Schwenkarms (14) in einer Stellung aufweist, die es der Verbindung mit der Trommel (9) erlaubt, sich später zu ändern, wobei die Verriegelungsvorrichtung einen Riegel (26) umfasst, der auf der hinteren Verbindungsachse (18) befestigt und imstande ist, in eine auf der hinteren Wand (11) befestigte Falle (27) zu fallen.

9. Transportmittel nach Anspruch 5, **dadurch gekennzeichnet, dass**, wenn der Ansatz (22) und das Ende (16) des hinteren Schwenkarms (14) verbunden sind, der Schwenkarm (14) imstande ist, die Plane (10) zu führen, indem er sie je nach Fall zu der anderen Seitenwand des Behälters (1) abwickelt oder aufwickelt.

10. Transportmittel nach Anspruch 1, **dadurch gekennzeichnet, dass** die Verbindungsvorrichtung mit variablem Winkel ständig durch eine Gelenk-Verbindungsvorrichtung (28, 29, 30) realisiert ist, die die Wickelvorrichtung (9) und den hinteren Schwenkarm (14) verbindet.

11. Transportmittel nach Anspruch 10, **dadurch gekennzeichnet, dass** die Gelenk-Verbindungsvorrichtung eine mit einem Kardangelenk (28) oder mit Fingern (29) oder auch mit einer halbstarren Elastomerverbindung (30) ausgestattet Welle ist.

12. Transportmittel nach Anspruch 1, **dadurch gekennzeichnet, dass** die hintere Wand (11) montiert ist, um entweder ein Öffnen durch einfache oder mehrfache seitliche Bewegung, durch senkrechtes Schwenken nach oben und nach unten, durch senkrechtes oder fast senkrechtes Heben oder durch Drehen nach oben um Scharniere (24a, 24b), die in die vordere Richtung des Behälters (1) versetzt sind oder nicht, zu erlauben.

13. Transportmittel nach Anspruch 1, **dadurch gekennzeichnet, dass** die Rückholvorrichtung (5, 15) nach vorn und nach hinten des Behälters (1) eine Rückholfeder oder einen Zylinder umfasst.

14. Transportmittel nach Anspruch 1, **dadurch gekennzeichnet, dass** es automatische Mittel umfasst, um die Steuerung des Abdeckprozesses von Beginn bis zum vollständigen Abdecken des Behälters (1) mit der gespannten Plane (10) und umgekehrt zu gewährleisten.

15. Transportmittel nach Anspruch 14, **dadurch gekennzeichnet, dass** die automatischen Mittel von Sensoren (S1 bis S6) gesteuerte elektrische Steuerkreise (32) umfassen, die Relais (K1 bis K6) ansteuern, um Spulen (Y1 bis Y10) zu steuern, die wiederum Elektroventile steuern, die jeweils einen Energiekreis auslösen.

16. Transportmittel nach Anspruch 15, **dadurch gekennzeichnet, dass** es ein entferntes Bedienfeld (31) umfasst, das mit Schaltern (I1 bis I5) und mit Dioden zur Zustandsanzeige (L1 bis L7) ausgestattet ist, das mit Kabeln und Verbindern (33) mit den vorgenannten Steuerkreisen (32) verbunden ist und es einem Bediener erlaubt, die Durchführungssequenz der jeweiligen Funktionen Aufwickeln/Abwickeln der Plane, Öffnen/Schließen der hinteren Verbindung der Wickeltrommel, Öffnen/Schließen der hinteren Wand, der Steuerung jeweils eines Rollbodens, einer Schubwand, der Anhängerladung oder jeder anderen Entladevorrichtung des Ladebehälters in einer ersten Geschwindigkeit und jeweils eines Rollbodens, einer Schubwand, der Anhängerladung oder jeder anderen Entladevorrichtung des Ladebehälters in einer zweiten Geschwindigkeit auszulösen und zu überwachen.

17. Transportmittel nach Anspruch 15, **dadurch gekennzeichnet, dass** die Sensoren (S1 bis S6) imstande sind, jeweils zu überprüfen, ob die Plane in aufgewickelter Stellung ist, ob die Plane in abgewickelter Stellung ist, ob die hintere Verbindung geöffnet ist, ob die hintere Verbindung geschlossen ist, ob die hintere Wand geschlossen ist und ob die hintere Wand geöffnet ist.

18. Transportmittel nach Anspruch 16, **dadurch gekennzeichnet, dass** die Dioden (L1 bis L7) jeweils die Zustände aufgewickelt und abgewickelt der Plane, geöffnet und geschlossen der Verbindung und geschlossen und geöffnet der hinteren Wand anzeigen.

19. Transportmittel zur Bewegung auf der Straße, der Schiene oder im Gelände, vor allem für Landwirtschaft und Bergbau, nach einem der vorangehenden Ansprüche.

20. Transportmittel nach Anspruch 19, **dadurch gekennzeichnet, dass** das Transportmittel ein Anhänger zur Beladung durch Blasen oder Schütten in den Behälter ist, wie zum Beispiel ein Siloanhänger, ein Kipper, ein Anhänger mit Schubwand oder ein Materialstreuer.
